**Europäisches Patentamt**

**European Patent Office**

**Office européen des brevets**

(19)

(11) Veröffentlichungsnummer: **0 135 613**
**B1**

(12)

# EUROPÄISCHE PATENTSCHRIFT

(45) Veröffentlichungstag der Patentschrift:
**07.01.88**

(21) Anmeldenummer: **83110454.2**

(22) Anmeldetag: **20.10.83**

(51) Int. Cl.⁴: **H 02 P 7/00**, B 23 B 45/02

(54) **Verfahren und Vorrichtung zur Regelung eines Elektromotors, bei welchem die Drehzahl im lastfreien Leerlaufbetrieb automatisch abgesenkt wird.**

(30) Priorität: **29.09.83 DE 3335237**

(43) Veröffentlichungstag der Anmeldung:
**03.04.85 Patentblatt 85/14**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**DE - A - 1 936 042**
**DE - A - 2 855 969**
**DE - B - 2 407 601**

(73) Patentinhaber: **Kress-elektrik GmbH + Co. Elektromotorenfabrik, Hechinger Strasse, D-7457 Bisingen (DE)**

(72) Erfinder: **Binder, Alfred, Narzissenweg, D-7457 Bissingen (DE)**

(74) Vertreter: **Otte, Peter, Dipl.-Ing., Tiroler Strasse 15, D-7250 Leonberg (DE)**

## Beschreibung

Die Erfindung geht aus von einem Verfahren und einer Vorrichtung zur Regelung eines Elektromotors, bei welchem die Drehzahl im lastfreien Leerlaufbetrieb automatisch abgesenkt und im Arbeitsbetrieb unter Last auf vorgegebene Drehzahlwerte angehoben wird. Steuereinrichtungen, die eine automatische Anpassung der Drehzahlen eines Elektromotors an einen lastfreien Leerlaufbetrieb und einen Arbeitsbetrieb unter Last bewirken, sind bekannt (CH-A-580 883; DE-A-24 07 601).

Bei diesen bekannten Steuereinrichtungen, die speziell der Absenkung der Drehzahl eines wechselstromgespeisten Reihenschlussmotors im Leerlaufbetrieb dienen, lässt sich die Drehzahl des Elektromotors im lastfreien Zustand dadurch automatisch sprungartig absenken – um beispielsweise eine Geräuschminderung zu erreichen –, dass die Stromaufnahme des Motors über einen induktiven Stromwandler erfasst und nach Vergleich mit einem Schwellwert zur Ansteuerung einer Drehzahlregelschaltung im Motorstromkreis dient. Die Drehzahlregelschaltung im Motorstromkreis arbeitet dabei mit Hilfe eines Thyristors, der in etwa nach Art einer Phasenanschnittsteuerung so ausgebildet ist, dass er lediglich zwischen einer Vollwellen- und einer Halbwellen-Stromversorgung des Motors umschalten kann (CH-A-580 883).

Ein weiteres Ausführungsbeispiel in dieser CH-Patentschrift, welches auch das einzige Ausführungsbeispiel der genannten DE-A-24 07 601 ist, kann sich zwar von der starren Umschaltmöglichkeit zwischen Vollwellenbetrieb und einer im Halbwellenbetrieb auf lediglich 70% reduzierten Drehzahl lösen, ist aber komplizierter aufgebaut und benötigt eine mittelpunktangezapfte Sekundärwicklung des den Motorstrom erfassenden Stromwandlers in Verbindung mit einer Diodenhalbbrücke, wobei die Diodendurchlassspannungen mit der Basisemitterspannung eines Transistors verglichen werden, der dann seinerseits über eine Diodenvollbrücke auf den Steuerstromkreis eines Triacs arbeitet, der mit den Anschlüssen des Elektromotors in Reihe liegt. Je nach den durch den Vergleich der Diodendurchlassspannungen zur Spannung der Basisemitterstrecke des Transistors sich ergebenden Spannungswerten erfolgt dann die Umschaltung zwischen Leerlauf und Lastbetrieb. Da Diodendurchlassspannungen, desgleichen Basisemitterspannungen von Transistoren nicht zuletzt auch eine Funktion des technologischen Aufbaus der beteiligten Halbleiter sind, wobei schon geringe Herstellungseinflüsse erhebliche Spannungsunterschiede bewirken können, bedarf es einer sorgfältigen Zusammenstellung der beteiligten Halbleiterpaarungen, um genauer bestimmbare Umschaltsprungpunkte bei vorgegebenen Drehzahlwerten sicherzustellen.

Allgemein muss aber bei den bekannten Steuereinrichtungen als problematisch angesehen werden, dass diese lediglich über solche Zeitschaltungen verfügen, die nur innerhalb eines Periodenzyklus der den Elektromotor speisenden Wechselspannung wirksam sein können, die also nur zur Realisierung von Phasenanschnittsteuerungen eingesetzt werden können. Dies bedeutet mit anderen Worten, dass die Umschaltungen zwischen lastfreiem Leerlaufbetrieb und Arbeitsbetrieb, in welchem der Elektromotor auf Nenndrehzahl läuft, den erfassten Motorstromänderungen unmittelbar folgen, so dass Rückschaltungen in die Leerlaufdrehzahl auch bei sehr kurzzeitigem Absetzen der Last, gegebenenfalls auch nur bei sich ergebenden Lastschwankungen nicht vermeidbar sind. Hier sei noch darauf hingewiesen, dass der Diagrammverlauf der Fig. 2 der DE-A-24 07 601 bzw. der CH-A-580 883 lediglich das willkürliche Springen von Istwertgrössen, nämlich die Abhängigkeit des von einem Elektromotor abgegebenen Drehmoments M über dessen Drehzahl n zeigt und keine Veränderungen im Bereich der Regeleinrichtung betrifft, wie beispielsweise die Nachführung der Ansprechempfindlichkeit des den jeweiligen Istwert des vom Elektromotor gezogenen Stroms mit einem Sollwert vergleichenden Stromsensors.

Andererseits ist es aber gerade bei Bohrmaschinen, bei Antrieben von Sägen u.dgl. eine häufiger ausgeübte Eigenart des Benutzers, mit dem Andrücken des Werkzeugs, etwa beim Bohren, kurzzeitig auszusetzen, damit das Handwerkzeug wieder hochdrehen kann, um dann mit höherer Drehzahl wieder voll auf Lastbetrieb zu gehen. Die bekannten Steuer- und Regelschaltungen für einen Elektromotor würden auf ein solches Verhalten aber gerade entgegengesetzt reagieren und statt auf volle Nenndrehzahl hochzufahren, sofort auf Leerlauf umschalten.

Das Schaltverhalten der bekannten Drehzahlregelschaltungen kann auch insofern problematisch sein, als nicht erkannt worden ist, dass im Arbeitsbetrieb unter Last die Motorstromschwankungen notwendigerweise wesentlich grösser sind als die Änderungen, die sich im Motorstrom ergeben, wenn dieser im Leerlauf dreht und durch eine einsetzende Belastung und einen entsprechenden Motorstromanstieg zum Hochschalten veranlasst werden soll.

Es ist auch bekannt, dass Elektromotoren beim Anlaufen für die Speisespannung praktisch einen lediglich durch den ohmschen Wicklungswiderstand abgemilderten Kurzschluss bilden, sich also anfänglich ein hoher Motoranlaufstrom ergibt. Es ist daher nicht auszuschliessen, dass diese bekannten, zwischen Nenndrehzahl und Leerlauf des Elektromotors unterscheidenden Drehzahlregelschaltungen sofort beim Anfahren auf Nenndrehzahl hochfahren, unter Umständen sogar ohne die Möglichkeit, wieder auf Leerlaufdrehzahl rückfallen zu können.

Allgemein ist es bei elektromotorisch angetriebenen Handwerkmaschinen bekannt (DE-A-31 03 286), die Drehzahl während des Betriebs durch eine Drehzahlregelschaltung konstant zu halten. Hierdurch lässt sich ein Absinken der Drehzahl bei zunehmender Belastung während des Arbeitsvorganges verhindern, wobei für die Drehzahlregelung auch mehrere Solldrehzahlwerte vorgegeben werden können. Zwischen diesen Solldrehzahlwerten kann die Drehzahl umgeschaltet werden, so dass sich eine Anpassung an das zu bearbeitende Material ergibt. Die Umschaltung kann manuell durch Betätigung von Tasten oder Schaltern erfolgen.

Üblicherweise werden zur belastungsunabhängigen Konstanthaltung der Drehzahl von Handwerkzeugen Phasenanschnittschaltungen eingesetzt, die über ein einfach (für eine Halbwelle) oder ein in beiden Richtungen (Vollwellensteuerung) wirkendes, in seinem Leitfähigkeitsverhalten steuerbares Ventil (Thyristor oder Triac) in Reihe mit den Wicklungen des Elektromotors verfügen (DE-A-1 763 810). Es ist aber bei solchen Drehzahlregelschaltungen auch bekannt, lediglich über Schalter Dioden in den Motorstromkreis parallel zu schon in Gegenrichtung leitende weitere Dioden zu schalten, wodurch gegebenenfalls auch zusätzliche Wicklungsteile des Elektromotors an Spannung gelangen und sich ebenfalls in etwa eine Konstanthaltung der Belastungsdrehzahl von Elektromotoren erzielen lässt (FR-A-2 097 940, DE-A-2 310 835).

Ferner ist es bei einer Schaltungsanordnung für einen elektromotorischen Antrieb mit Kriechgang und Vollwellensteuerung bekannt (DE-A-28 55 969), der den Motorstrom steuernden Phasenanschnittsteuerung ein Zeitverzögerungsglied zuzuordnen, welches erst nach Zeitablauf (beispielsweise Entladedauer eines Kondensators) den von einem Einstellpotentiometer vom Benutzer vorgewählten Stromflusswinkel für den Weiterbetrieb nach Einschalten freigibt. Hierdurch wird im Sinne einer Sanftanlaufschaltung zur Drehzahlumschaltung zwischen Kriechgang und Vollwellensteuerung eine gewünschte Zeitverzögerung wirksam.

Der Erfindung liegt die Aufgabe zugrunde, bei einem in seiner Drehzahl automatisch zwischen lastfreiem Leerlaufbetrieb und Arbeitsbetrieb unter Last umgeschalteten Elektromotor eine Anpassung an die praktischen Erfordernisse vorzunehmen und beispielsweise dafür zu sorgen, dass Lastschwankungen bis zum kurzzeitigen Absetzen der Last ausgeglichen werden, Rückschaltungen in den Leerlaufbetrieb auch dann sicher möglich sind, wenn ohne Belastung die Stromaufnahme bei Arbeitsdrehzahl höher als bei Bereitstellungs- oder Leerlaufdrehzahl ist und allgemein glättend auf den Betrieb eingewirkt wird.

Das erfindungsgemässe Verfahren und die erfindungsgemässe Vorrichtung lösen diese Aufgabe jeweils mit den kennzeichnenden Merkmalen des Hauptanspruches bzw. des ersten Verfahrensanspruchs. Es ergibt sich der Vorteil, dass aufgrund der gleichzeitig beim Übergang auf den Lastbetrieb vorgenommenen Umschaltung der Stromsensor-Empfindlichkeit dieser in seiner Fähigkeit, lastfreien Betrieb vom Lastbetrieb zu unterscheiden, nachgeführt wird, so dass auch bei erhöhter Arbeitsdrehzahl sicher Rückschaltbefehle ergehen, die, entsprechend einem weiteren Vorteil der Erfindung, erst nach Verzögerung für eine vorgegebene Zeitdauer effektiv das Rückschalten des Elektromotors in die Leerlauf- oder Bereitstellungsdrehzahl dann bewirken. Durch diese zeitliche Verzögerung ist sichergestellt, dass nicht bei jedem kurzzeitigen Absetzen der Belastung sofort in die niedrige Drehzahl umgeschaltet und dann notwendigerweise beim Weiterarbeiten erst wieder auf erhöhte Arbeitsdrehzahl hochgefahren werden muss.

Der so erfindungsgemäss geregelte Elektromotor, etwa zum Antrieb von Handwerkzeugmaschinen, Kreissägen o.dgl. weist dann eine oder mehrere Solldrehzahlen im herkömmlichen Arbeitsdrehzahlbereich und eine niedrige Bereitstellungsdrehzahl auf, die auch als Leerlaufdrehzahl bezeichnet werden kann und in welcher die jeweilige Maschine bzw. der diese antreibende Elektromotor ausserhalb der eigentlichen Arbeitszeiten, d.h. vor und nach jedem Bearbeitungsvorgang und in den Arbeitspausen läuft. Hierdurch erzeugt die jeweils angetriebene Maschine ausserhalb der eigentlichen Arbeitszeiten nur ein erheblich reduziertes und weniger lästiges Geräusch, was beispielsweise besonders für Kreissägen von Bedeutung sein kann und verbraucht in den lastfreien Zwischenzeiten natürlich auch merklich weniger Strom.

Die Anforderungen einer Arbeitsdrehzahl wird mit Hilfe eines Stromsensors und in der Weiterverarbeitung von dessen Ausgangssignal elektronisch festgestellt, da sich bei der Belastung der Maschine, auch wenn sie im Leerlauf dreht, eine entsprechend ansteigende Stromaufnahme des Elektromotors ergibt.

Die den Nachlauf des Elektromotors bei Absetzen der Last bewirkende Zeitstufe ist retriggerbar; steigt also die Stromaufnahme des Motors während der lastfreien Nachlaufzeit wieder an – dies entspricht einem Leerlauf bei Arbeitsdrehzahlen –, dann wird die Zeitstufe erneut gesetzt und die Arbeitsdrehzahl wird beibehalten und kann dann noch entsprechend durch die Drehzahlregelschaltung belastungsunabhängig auf konstante Arbeitsdrehzahl geregelt werden.

Durch die in den abhängigen Ansprüchen aufgeführten Massnahmen sind vorteilhafte Weiterbildungen und Verbesserungen der Erfindung möglich. Besonders vorteilhaft ist eine Schaltung zum Ausblenden des Anlaufstromes, wie er sich beim Einschalten eines Elektromotors als kurzzeitige Stromspitze stets ergibt. Die Erfindung verhindert das Hochfahren des Elektromotors bzw. der von diesem angetriebenen Maschine beim Einschalten sofort in die Arbeitsdrehzahl, und zwar durch eine Einschaltverzögerung, die ein Umschalten in die Arbeitsdrehzahl erst dann zulässt, wenn nach Abklingen des Anlaufstromes die Bereitstellungsdrehzahl erreicht ist.

Die in Verbindung mit vorliegender Erfindung bevorzugt vorgesehene Drehzahlregelschaltung kann einen mit der Maschinenwelle verbundenen Tachogenerator zur Erzeugung einer der Istdrehzahl entsprechenden Spannung aufweisen, zum Vergleich mit dem jeweils eingeschalteten Solldrehzahlwert und Nachführung der Drehzahl des Elektromotors über die schon erwähnte Phasenanschnittsteuerung.

Es versteht sich, dass die Erfindung auch bei solchen, von einem Elektromotor angetriebenen Maschinen anwendbar ist, die über zwei oder weitere verschiedene Arbeitsdrehzahlen verfügen, beispielsweise in Abstimmung auf die zu bearbeitenden Materialien. Die Auswahl zwischen diesen verschiedenen Arbeitsdrehzahlen, auf die dann aus der jeweiligen Bereitstellungsdrehzahl hochbeschleunigt wird, erfolgt in bekannter Weise und in diesem Fall durch Vorwahl über Tasten, Schalter oder auch Schiebwiderstände.

Vorteilhaft ist ferner, dass beispielsweise bei einem schnellen Ein- und Ausschalten mit kurzen, jedoch willkürlichen Pausen kein unkontrolliertes Verhalten des Gesamtsystems auftreten kann, sondern immer, gleichgültig ob der Motor zum Stillstand gekommen ist oder nicht, oder mit welchen Abklingzeitkonstanten bei den beteiligten Komponenten gerechnet werden muss, von den Anfangsbedingungen ausgegangen wird, mit anderen Worten, es wird beim Einschalten stets zunächst auf Leerlaufdrehzahl oder, besser gesagt, auf die Bereitstellungsdrehzahl gegangen, aus welcher dann bei Abruf der vollen Leistung, was sich automatisch bei Belastung des Elektromotors ergibt, sehr schnell hochbeschleunigt wird. Hierzu sind weitere Schaltungskomponenten vorgesehen, die im Sinne einer besonderen Hochlaufbeschleunigung auf eine üblicherweise vorhandene Sanftanlauf-Automatik einwirken.

Ferner ist vorteilhaft, dass durch eine spezielle Temperaturkompensation hinsichtlich der Empfindlichkeit der Stromerkennung auf den Temperaturzustand oder Erwärmungsgrad der Maschine insgesamt abgestellt wird, so dass eine feinfühlige Anpassung und problemlose Steuerung unabhängig davon erzielt wird, ob eine kalte Maschine erstmalig eingesetzt wird oder mit einem stark erwärmten Gerät gearbeitet wird, welches nur kurzzeitig ausgeschaltet wurde.

Besonders vorteilhaft ist bei vorliegender Erfindung die Möglichkeit eines weitgehenden Einsatzes von integrierten Schaltungen, die, ergänzt durch einen vorzugsweise ebenfalls integrierten Regelbaustein und zusammen mit den noch erforderlichen Verschaltungsmitteln, wie Widerstände und Kondensatoren, auch insgesamt integriert werden kann.

In diesem Zusammenhang versteht es sich auch, dass die dargestellten Ausführungsbeispiele von Schaltungen die Erfindung in ihrer jeweils charakteristischen Funktion und in ihrem gemeinsamen Zusammenwirken darstellen, nicht im diskreten Schaltungsaufbau, der nur beispielsweise in dieser Form ausgebildet ist. Es ist daher auch möglich, mehr oder weniger grosse Teilbereiche der Schaltung, wie schon erwähnt, insgesamt zu integrieren und in dieser Form als logische Steuerschaltung, Mikrorechner, Mikroprozessor o.dgl. auszubilden, vorausgesetzt selbstverständlich, dass die im folgenden anhand der Detailschaltung erläuterten Wirkungen und Funktionen ebenfalls realisiert sind. Die Erfindung erstreckt sich dann in ihrer Wirkung auch auf höher integrierte Einheiten und solche Systeme, bei denen die verschiedenen Arbeitsabläufe durch Abfrage eines Speichers im wesentlichen seriell durchgeführt werden.

In einer Weiterbildung der Erfindung ist die Erfassung des momentanen Istwerts des vom Elektromotor bezogenen Stromes durch einen Widerstand und dessen nachfolgende Verstärkung durch den Regelbaustein selbst vorteilhaft, so dass man eine ausreichend grosse, sich mit Belastung des Motors hinreichend stark ändernde Messspannung zur Verfügung hat, trotz der Niederohmigkeit des mit dem Motor in Reihe geschalteten Widerstands. Ein weiterer Vorteil besteht darin, dass der Drehzahlregler über eine einen Kondensator umfassende Sanftanlaufschaltung verfügt, um beim Einschalten des von ihm gesteuerten Elektromotors im ersten Augenblick den sehr hohen Anlaufstrom zu reduzieren. Der Drehzahlregler setzt den Kondensator bei jedem Abschalten automatisch zurück, entlädt diesen also und durch die Anschaltung der zum erfindungsgemässen System der Drehzahlumschaltung zwischen Bereitstellungs- und Arbeitsdrehzahl gehörenden Einschaltverzögerung an den Kondensator des Sanftanlaufs ist sichergestellt, dass auch die Einschaltverzögerung grundsätzlich und gleichgültig wie häufig hin- und hergeschaltet wird, immer auf die ursprünglichen Anfangsbedingungen rückgesetzt ist.

Ausführungsbeispiele der Erfindung sind in der Zeichnung dargestellt und werden in der nachfolgenden Beschreibung näher erläutert. Es zeigen:

Fig. 1 ein erstes grundlegendes Blockschaltbild vorliegender Erfindung,

Fig. 2 eine auf dem Blockschaltbild der Fig. 1 basierende detaillierte Schaltungsdarstellung, Fig.

Fig. 3 ein mögliches Drehzahlzeitdiagramm zur Umschaltung zwischen Bereitstellungs- und mindestens einer Arbeitsdrehzahl,

Fig. 4 ein weiteres Ausführungsbeispiel der Erfindung anhand eines erweiterten Blockschaltbilds und

Fig. 5 eine bevorzugte Ausführungsform einer Vorrichtung zur automatischen Umschaltung zwischen Leerlauf- und Arbeitsbetrieb in detaillierter Darstellung entsprechend dem Blockschaltbild der Fig. 4 unter Verwendung von integrierten Schaltungsbausteinen.

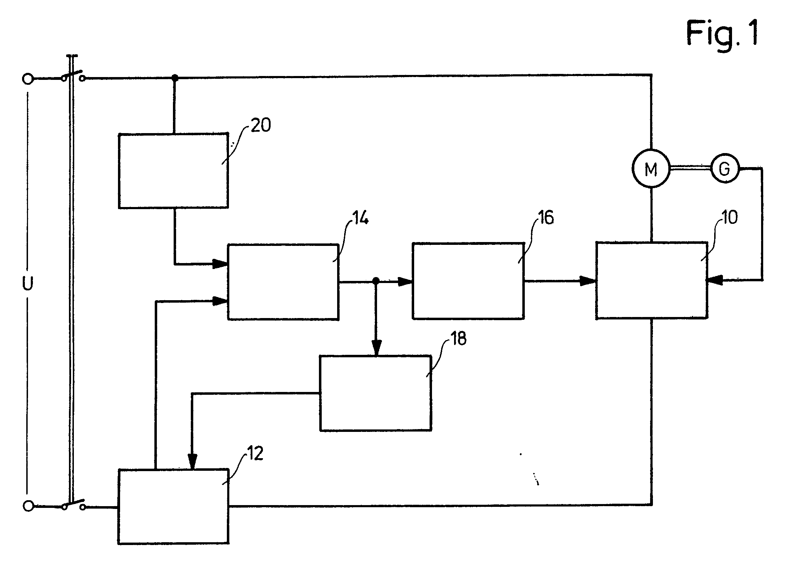

Entsprechend der Fig. 1 wird die Versorgungsspannung U dem Elektromotor M zum Antrieb einer Handwerkzeugmaschine o.dgl. über eine Drehzahlregelungsschaltung 10 und einen Stromsensor 12 zugeführt. Zur Erzeugung eines Drehzahl-Istwertes kann ein von der Welle des Elektromotors M angetriebener Tachogenerator G vorgesehen sein, der sein Ausgangssignal der Drehzahlregelungsschaltung 10 zuführt. Die Drehzahlregelungsschaltung 10 steuert den dem Elektromotor M zugeführten Strom z.B. über eine bekannte Phasenanschnittsteuerung in der Weise, dass die Ist-Drehzahl einem der Drehzahlregelungsschaltung 10 vorgegebenen Soll-Drehzahlwert nachgeregelt wird.

Der Stromsensor 12 erfasst den jeweils momentan vom Elektromotor M aufgenommenen Strom. Überschreitet die vom Stromsensor 12 festgestellte Stromstärke einen vorgegebenen Schwellenwert, so triggert der Stromsensor 12 eine Zeitstufe 14. Der Zeitstufe 14 ist eine Drehzahlumschaltung 16 nachgeschaltet. Die Drehzahlumschaltung 16 gibt der Drehzahlregelungsschaltung 10 den Soll-Drehzahlwert vor. Befindet sich die Zeitstufe 14 in einem ungetriggerten Zustand, so gibt die Drehzahlumschaltung 16 einen niedrigen Soll-Drehzahlwert vor, der der Bereitstellungsdrehzahl entspricht. Solange sich die Zeitstufe 14 in ihrem getriggerten Zustand befindet, gibt die Drehzahlumschaltung 16 einen höheren Soll-Drehzahlwert vor, der der Arbeitsdrehzahl der Handwerkzeugsmaschine entspricht.

Die Zeitstufe 14 weist eine Nachlaufzeit auf, so dass sie auch nach dem Ende des vom Stromsensor 12 kommenden Triggersignals noch für eine gewisse Zeitspanne in ihrem getriggerten Zustand verharrt und die Drehzahlumschaltung 16 den hohen Solldrehzahlwert vorgibt. Weiter ist die Zeitstufe 14 retriggerbar, so dass die Nachlaufzeit mit jedem vom Stromsensor 12 kommenden Triggersignal neu zu laufen beginnt.

Durch die Zeitstufe 14 wird weiter eine Schwellenwertumschaltung 18 angesteuert. Im getriggerten Zustand der Zeitstufe 14 wird durch die Schwellenwertumschaltung 18 der Stromstärkeschwellenwert des Stromsensors 12 heraufgesetzt. Der Stromsensor 12 führt in diesem Fall ein Triggersignal der Zeitstufe 14 nur dann zu, wenn der vom Elektromotor M aufgenommene Strom einen Stromschwellenwert überschreitet, der sich bei lastfreiem Betrieb des Elektromotors M in der hohen Arbeitsdrehzahl ergibt.

Weiter ist eine Einschaltverzögerung 20 vorgesehen. Die Einschaltverzögerung 20 blockiert die Zeitstufe 14 für eine vorgegebene Zeitspanne nach dem Einschalten der Versorgungsspannung U. Die Zeitspanne der Einschaltverzögerung 20 ist so gewählt, dass die Zeitstufe 14 erst dann durch den Stromsensor 12 getriggert werden kann, wenn die Drehzahl des Elektromotors M nach dem Einschalten der Versorgungsspannung U auf die niedrige Bereitstellungsdrehzahl gestiegen ist. Durch die Einschaltverzögerung 20 wird verhindert, dass durch die hohe Stromaufnahme des Elektromotors M beim Anlaufen die Zeitstufe 14 sofort getriggert wird und die Drehzahlregelungsschaltung 10 umgehend auf die hohe Arbeitsdrehzahl geht.

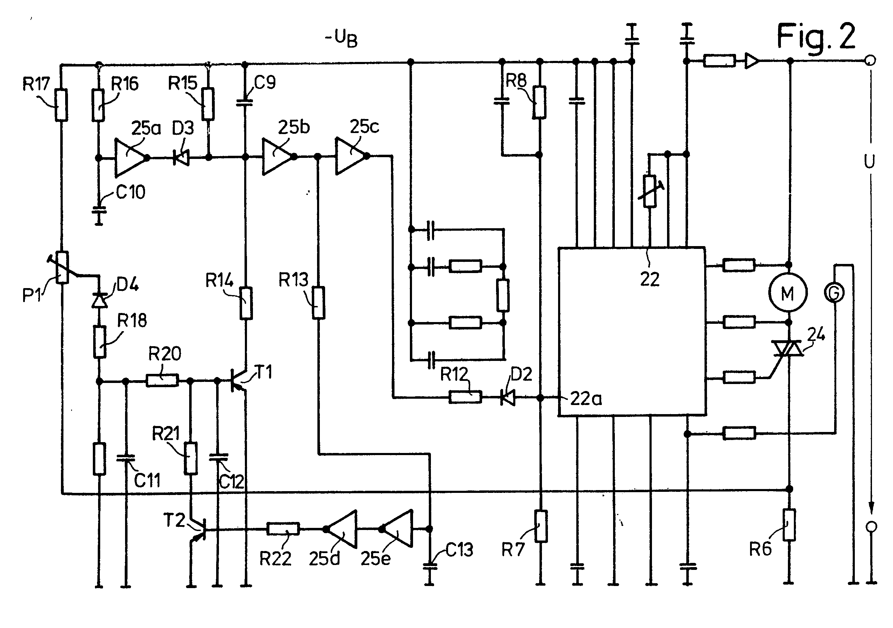

In Fig. 2 ist ein Ausführungsbeispiel der in Fig. 1 im Prinzip dargestellten Schaltungsanordnung im Detail gezeigt.

## Drehzahlregler I

Die Drehzahlregelungsschaltung 10 besteht aus einer als integrierte Schaltung 22 ausgebildeten herkömmlichen Regelungsschaltung, die einen in Reihe mit dem Elektromotor M geschalteten Triac 24 zur Phasenanschnittsteuerung schaltet. Der integrierten Regelschaltung 22 wird die Ausgangsspannung des Tachogenerators G als Ist-Drehzahlwert zugeführt. Die den jeweiligen Soll-Drehzahlwert darstellende Spannung wird in später beschriebener Weise der integrierten Schaltung 22 zugeführt.

## Stromsensor I

Der vom Elektromotor M aufgenommene Strom wird durch den in folgender Weise aufgebauten Stromsensor 12 bestimmt. Durch eine negative Versorgungsspannung $-U_B$ wird über dem Widerstand R17, das Potentiometer P1 und dem Widerstand R6 eine Gleichspannung erzeugt, die an dem Potentiometer P1 abgegriffen wird. Der Widerstand R6 ist dabei auch mit dem Elektromotor M in Reihe geschaltet, so dass der Spannungsabfall über diesen Widerstand R6 und damit die an dem Potentiometer P1 abgegriffene Spannung zusätzlich von dem von dem Elektromotor M aufgenommenen Strom abhängt.

Die von dem Potentiometer P1 abgegriffene, bei Wechselstromspeisung des Motors welligkeitsbehaftete Gleichspannung wird über eine Diode D4 an die Basis eines Transistors T1 angelegt. Das Potentiometer P1 wird so eingestellt, dass im Leerlauf der Werkzeugmaschine bei einer niedrigen Bereitstellungsdrehzahl die an dem Transistor T1 anliegende Gleichspannung diesen Transistor sperrt. Steigt die Stromaufnahme des Elektromotors M bei Belastung an, so entsteht ein grösserer Spannungsabfall am Widerstand R6, die am Potentiometer P1 abgegriffene Spannung steigt an und der Transistor T1 schaltet durch. Zwischen die Diode D4 und den Transistor T1 sind zwei Integrationsglieder aus Widerstand R18 und Kondensator C11 und aus Widerstand R20 und Kondensator C12 geschaltet, die ein Durchschalten des Transistors T1 durch Störspannungsspitzen verhindern.

## Zeitstufe I

Durch das Durchschalten des Transistors T1 wird die nachfolgend beschriebene Zeitstufe 14 getriggert. Der Schwellenwert der Stromaufnahme des Elektromotors M, bei welchem der Transistor T1 durchgeschaltet und die nachfolgende Zeitstufe 14 getriggert wird, ist mittels des Potentiometers P1 einstellbar.

Mit dem Transistor T1 ist ein Kondensator C9 in Reihe geschaltet, der beim Durchschalten des Transistors T1 über einen Reihenwiderstand R14 aufgeladen wird. Die Aufladezeitkonstante ist dabei sehr kurz gewählt und beträgt ca. 10 ms.

Solange die Handwerkzeugmaschine belastet ist, d.h. die Stromaufnahme des Elektromotors M über dem vorgegebenen Schwellenwert liegt, bleibt der Transistor T1 durchgeschaltet und hält den Kondensator C9 aufgeladen. Endet die Belastung der Handwerkzeugmaschine und sinkt die Stromaufnahme des Elektromotors M dementsprechend unter den vorgegebenen Schwellenwert ab, sperrt der Transistor T1 wieder. Der Kondensator C9 wird über einen Widerstand R15 entladen. Die durch den Kondensator C9 und den Widerstand R15 bestimmte Zeitkonstante legt die Nachlaufzeit bzw. Verharrzeit der Zeitstufe 14 fest. Jede erneute Belastung der Handwerkzeugmaschine während dieser Nachlaufzeit führt zu einem erneuten Durchschalten des Transistors T1 und einem Wiederaufladen des Kondensators C9. Die Nachlaufzeit beginnt somit erneut, d.h. die Zeitstufe 14 ist retriggerbar.

Drehzahlumschaltung I

Durch die Zeitstufe 14 wird die Drehzahlumschaltung 16 gesteuert. Die am Eingang 22a der integrierten Schaltung 22 anliegende Spannung bestimmt den Solldrehzahlwert der Drehzahlregelungsschaltung 10. Dieser Eingang 22a liegt einerseits an einem von den Widerständen R8 und R7 gebildeten Spannungsteiler und ist andererseits mit dem Kondensator C9 über eine Reihenschaltung von zwei Invertern 25b und 25c, einem Widerstand R12 und einer Diode D2 verbunden.

Ist der Motor nicht belastet und der Kondensator C9 entladen, so liegt die negative Betriebsspannung $-U_B$ am Ausgang des Inverters 25c, so dass der Widerstand R12 über die Diode D2 parallel zu dem Widerstand R8 geschaltet ist. Die Spannung am Eingang 22a der integrierten Schaltung 22 ist somit stärker negativ und die Drehzahlregelungsschaltung 10 hält die Drehzahl des Elektromotors M (vereinbarungsgemäss) auf niedriger Bereitstellungsdrehzahl. Bei Belastung wird der Kondensator C9 aufgeladen, so dass die Spannung am Ausgang des Inverters 25c stärker positiv wird und die Diode D2 sperrt. Die Spannung am Eingang 22a wird daher nur noch durch das Spannungsteilerverhältnis der Widerstände R7 und R8 bestimmt und steigt auf einen höheren Wert an. Entsprechend dieser höheren Spannung am Eingang 22a regelt die Drehzahlregelungsschaltung 10 die Drehzahl des Elektromotors M auf die höhere Arbeitsdrehzahl. Nach Beendigung der Belastung schaltet die Drehzahl wieder auf die niedrigere Betriebsdrehzahl um, sobald nach der Nachlaufzeit der Zeitstufe 14 die Spannung am Kondensator C9 soweit abgefallen ist, dass die Diode D2 wieder leitet.

Schwellenwertumschaltung I

Der Verbindungspunkt zwischen dem Inverter 25b und dem Inverter 25c liegt über ein aus einem Widerstand R13 und einem Kondensator C13 bestehendes Integrationsglied und hintereinandergeschaltete Inverter 25e und 25d sowie einen Widerstand R22 an dem Steuereingang eines Transistors T2. Der Transistor T2 liegt in einer Reihenschaltung mit einem Widerstand R21 an der Basis des Transistors T1.

Dadurch wird die Schwellenwertumschaltung 18 gebildet, die in folgender Weise arbeitet. Im unbelasteten Zustand und bei entladenem Kondensator C9 liegt der Ausgang des Inverters 25b auf positivem Potential und dementsprechend liegt auch der Ausgang des Inverters 25d auf positivem Potential, so dass der Transistor T2 sperrt. Ist dagegen bei getriggerter Zeitstufe 14 der Kondensator C9 aufgeladen, so liegt der Ausgang des Inverters 25b auf negativem Potential und der Ausgang des Inverters 25d nimmt ebenfalls negatives Potential an, so dass der Transistor T2 durchschaltet. Der Widerstand R21 wird damit wirksam und bildet mit dem Widerstand R20 einen Spannungsteiler für die von dem Potentiometer P1 kommende Spannung. Aufgrund dieses Spannungsteilers muss ein höherer Spannungsabfall vom Widerstand R6 eingekoppelt werden, um den Transistor T1 durchzuschalten. Dies bedeutet, dass der Stromstärkeschwellenwert des Stromsensors 12 heraufgesetzt ist.

Das Spannungsteilerverhältnis der Widerstände R20 und R21 ist dann so gewählt, dass der Transistor T1 nicht durchschaltet, wenn der Spannungsabfall am Widerstand R6 der Stromaufnahme des Elektromotors M im unbelasteten Zustand (Leerlauf) bei hoher Arbeitsdrehzahl entspricht. Ein Durchschalten des Transistors T1 erfolgt nur, wenn die Stromaufnahme bei Belastung über den Schwellenwert des Stroms bei lastfreier Arbeitsdrehzahl ansteigt. Ein Retriggern der Zeitstufe 14 erfolgt somit während der Nachlaufzeit nur bei einer erneuten effektiven Belastung des Motors.

Durch das Integrationsglied aus dem Widerstand R13 und dem Kondensator C13 wird bewirkt, dass die Schwellenwertumschaltung erst mit einer zeitlichen Verzögerung nach dem Triggern der Zeitstufe 14 erfolgt, die durch die Zeitkonstante von Widerstand R13 und Kondensator C13 bestimmt ist. Die Ansprechempfindlichkeit des Stromsensors 12 wird daher erst zurückgenommen, wenn der Elektromotor M auf die Arbeitsdrehzahl beschleunigt ist. Dadurch werden Regelschwingungen ausgeschlossen.

Einschaltverzögerung I

Um zu verhindern, dass der hohe Einschaltstrom des Elektromotors M ein sofortiges Beschleunigen auf die Arbeitsdrehzahl verursacht, ist die folgende Einschaltverzögerung 20 vorgesehen. Der Kondensator C9 der Zeitstufe 14 ist durch die Reihenschaltung einer Diode D3, eines Inverters 25a und eines aus einem Widerstand R16 und einem Kondensator C10 bestehenden Integrationsgliedes überbrückt. Beim Einschalten der Betriebsspannung $-U_B$ wird der Kondensator C9 über die zunächst leitende Diode D3 kurzgeschlossen, so dass er durch den Transistor T1 nicht aufgeladen werden kann. Erst wenn der Kondensator C10 nach einer durch diesen und den Widerstand R16 bestimmten Zeitkonstanten aufgeladen ist, sperrt die Diode D3 und der Kondensator C9 kann aufgeladen werden, d.h. die Zeitstufe 14 kann getriggert werden. Solange die Betriebsspannung $-U_B$ anliegt, bleibt dann der Kondensator C10 aufgeladen und die Diode D3 gesperrt.

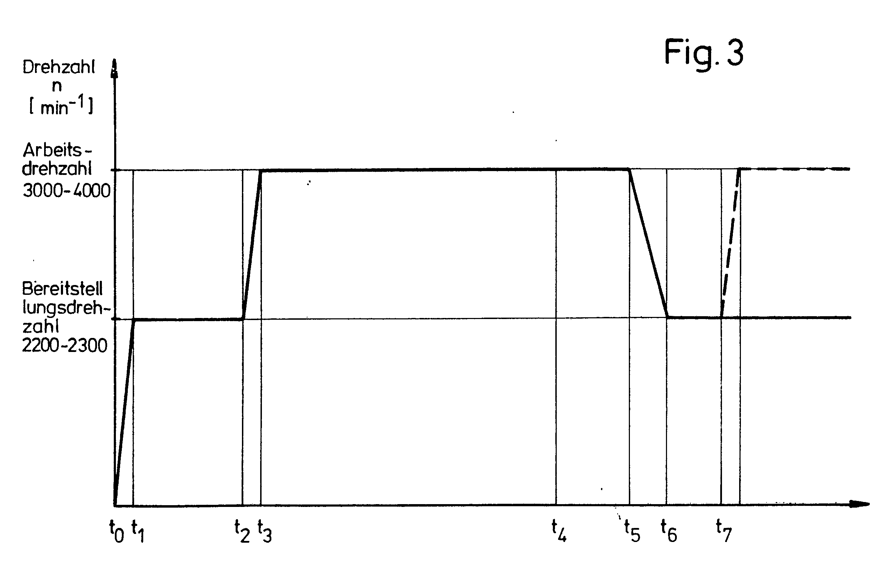

In dem Diagramm der Fig. 3 ist die Drehzahl n als Funktion der Zeit t zur Erläuterung der Funktion der erfindungsgemässen Schaltungsanordnung dargestellt.

Zum Zeitpunkt t0 wird die Handwerkzeugmaschine, beispielsweise eine Kreissäge, eingeschaltet. Der Elektromotor M läuft an und beschleunigt bis zur Zeit t1 auf die niedrige Bereitstellungsdrehzahl von beispielsweise 2 200 bis 2 300 U/min. Während der Zeitspanne t0 bis t1 ist die Einschaltverzögerung 20 wirksam, so dass die hohe Stromaufnahme des Elektromotors M beim Anlaufen nicht zu einem Triggern der Zeitstufe 14 führt. Die Handwerkzeugmaschine läuft nun mit der niedrigen Bereitstellungsdrehzahl, bis die Maschine zum Zeitpunkt t2 zum Arbeiten eingesetzt wird. Aufgrund der Belastung steigt die Stromaufnahme des Elektromotors M stark an, so dass die Zeitstufe 14 innerhalb von ca. 10 ms getriggert wird und die Drehzahlumschaltung 16 die Drehzahlregelungsschaltung 10 auf die höhere Arbeitsdrehzahl umschaltet. Der Elektromotor M läuft nun innerhalb von etwa 0,5 s auf die hohe Arbeitsdrehzahl von etws 3 800 bis 4 000 U/min hoch, die zur Zeit t3 erreicht ist. Diese hohe Arbeitsdrehzahl wird durch die Drehzahlregelungsschaltung 10 während der gesamten Arbeitsdauer bis zur Zeit t4 aufrechterhalten. Nach Beendigung des Arbeitsvorganges zum Zeitpunkt t4 wird die Arbeitsdrehzahl noch bis zum Zeitpunkt t5, d.h. für z.B. ca. 5 s entsprechend der Nachlaufzeit der Zeitstufe 14 aufrechterhalten. Wenn innerhalb der Nachlaufzeit t4 bis t5 kein neuer Arbeitsvorgang begonnen wird, der zu einem Retriggern der Zeitstufe 14 führt, schaltet die Drehzahlumschaltung 16 zur Zeit t5 wieder auf den niedrigen Solldrehzahlwert und die Drehzahl des Elektromotors M fällt wieder auf die Bereitstellungsdrehzahl ab, die zum Zeitpunkt t6 erreicht wird. In dieser niedrigen Bereitstellungsdrehzahl mit geringer Geräuschentwicklung läuft die Handwerkzeugmaschine nun bis zum Beginn des nächsten Arbeitsganges zum Zeitpunkt t7.

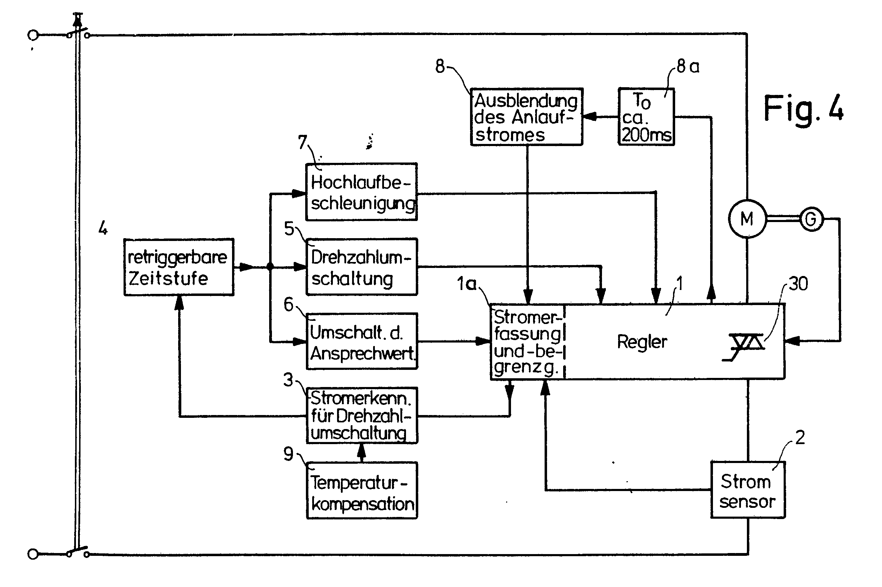

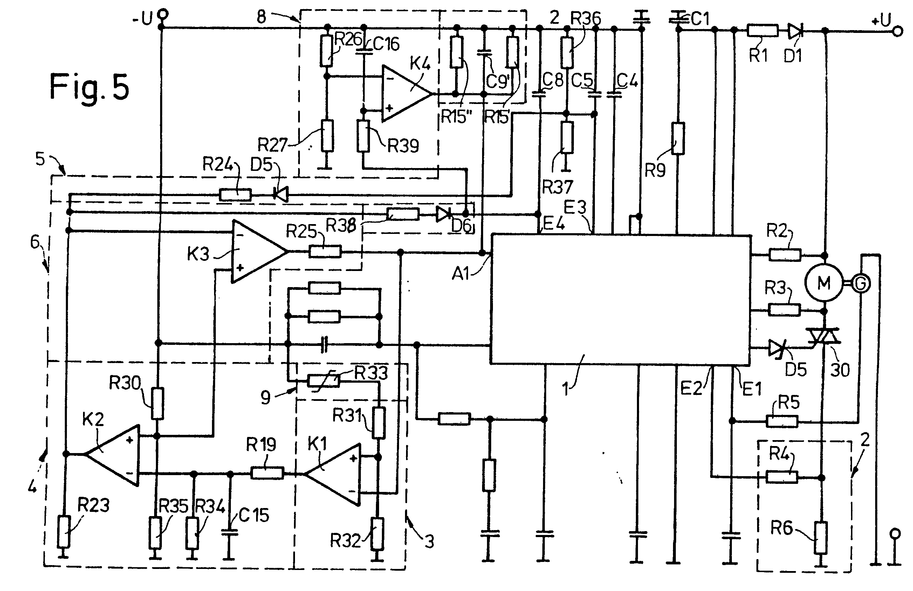

Das in den Fig. 4 und 5 dargestellte zweite Ausführungsbeispiel basiert auf den soeben erläuterten Grundvoraussetzungen, stellt diese in einen allgemeineren Rahmen und ermöglicht einen praxisgerechten Betrieb unter den verschiedensten Arbeitsbedingungen. Im folgenden werden, wie soeben auch, verschiedene Bausteine der erfindungsgemässen Schaltungsanordnung durch eigene Überschriften zur besseren Übersichtlichkeit gekennzeichnet; die im folgenden erläuterten Bausteine werden, da sie ein zweites Ausführungsbeispiel darstellen, in der Überschrift durch ein hinzugesetztes II von der ersten Ausführungsform unterschieden.

### Blockschaltbild der zweiten Ausführungsform

Ein Regler 1 überwacht und steuert die Drehzahl des Elektromotors M, der mit dem vom Regler 1 gesteuerten Triac 30 (Phasenanschnittsteuerung durch die Reglerbausteine) und einem Stromsensor 2 in Reihe geschaltet ist, und sorgt bei entsprechender Ansteuerung durch weitere externe oder interne Beschaltungen und/oder Bausteine für die Realisierung der Erfindung bei der Steuerung des Motors M. Der Regler 1 kann eine logische Steuerschaltung, eine beispielsweise auf einer Printplatte aus diskreten Bauelementen aufgebaute Verstärker/Vergleicher/Ansteuer-Schaltung sein, aber auch ein Mikrocomputer, ein Mikroprozessor, o.dgl. Wesentlich ist für die Realisierung der Erfindung lediglich, dass die im folgenden anhand der einzelnen Bausteine noch realisierten Funktionen durchgeführt werden. Dies gilt selbstverständlich für das erste Ausführungsbeispiel.

Dem Regler zugeordnet ist eine Schaltung 1a zur Stromerfassung und -begrenzung, die auch ein Teil des Reglers oder des diesen darstellenden integrierten Bausteins (IC) sein kann sowie ein Schaltungsblock 3 zur Stromerkennung, um eine Drehzahlumschaltung jeweils zwischen Bereitstellungsdrehzahl (Leerlaufdrehzahl) und Arbeitsdrehzahl (beispielsweise Nenndrehzahl) vorzubereiten; der Stromerkennungsschaltung 3 wird vom Regler 1, 1a ein vom Stromsensor 2 geliefertes, jedoch verstärktes Stromsignal zugeführt; die Stromerkennungsschaltung 3 steuert eine retriggerbare Zeitstufe 4, die so ausgebildet ist, dass an diese sich für jeweils vorgegebene Zeiträume in Abhängigkeit zur Belastung des Motors M Schaltzustände ergeben, die von einem nachgeschalteten Schaltungsblock 5 zur Drehzahlumschaltung entsprechend ausgewertet und durch Signalzuführung an den Regler 1 zur effektiven Ansteuerung des Motors über den Triac 30 zur Drehzahlumschaltung benutzt werden.

Der die retriggerbare Zeitstufe bildende Schaltungsblock 4 steuert parallel einen Schaltungsblock 6 zur Umschaltung des Ansprechwertes an, wodurch die Empfindlichkeit der Stromerkennung angepasst werden kann, um auch nach dem Hochschalten auf Arbeitsdrehzahl einen belastungsfreien Zustand des Elektromotors M sicher erkennen zu können. Es ist ferner noch ein Schaltungsblock 7 vorgesehen, der eine wirksame Hochlaufbeschleunigung auf Arbeitsdrehzahl sicherstellt, wenn die retriggerbare Zeitstufe eine Belastung des Elektromotors M signalisiert. Hierdurch verbessert sich das Ansprechverhalten; es braucht praktisch bis zur Abgabe der vollen Leistung durch den Elektromotor kaum gewartet zu werden und die Drehzahlzunahme beim Hochlauf erfährt eine Versteilerung.

Schliesslich ist noch ein Schaltungsblock 8 vorgesehen, der die Wirkung des üblichen hohen Anlaufstromes beim Einschalten des Elektromotors ausblendet, da im anderen Fall das erfindungsgemässe System bei jedem Einschaltvorgang grundsätzlich mit einem Hochbeschleunigen bis auf Arbeitsdrehzahl reagieren würde. Die Ausblendung des Anlaufstromes erfolgt mit einer gewissen Zeitverzögerung über ein vorgeschaltetes Zeitglied 8a.

Dem Schaltungsblock zur Stromerkennung ist schliesslich noch ein weiterer Schaltungsblock 9 zur Temperaturkompensation des angesteuerten Elektromotors M und im gewissen Sinne hierdurch auch des gesamten, von dem Elektromotor angetriebenen jeweiligen Gerätes zugeordnet, wodurch sichergestellt ist, dass unterschiedliche Stromänderungen, die sich bei gleicher Änderung der Belastung bei warmer oder kalter Maschine ergeben, kompensiert werden, mit anderen Worten, das erfindungsgemässe System reagiert unabhängig und unbeeinflusst zur jeweiligen Motor- und Wicklungstemperatur.

Im folgenden werden anhand der Darstellung der Fig. 5 Aufbau, Anschaltung und Wirkungsweise der in Fig. 4 dargestellten Schaltungsblöcke 1 bis 9 im einzelnen erläutert.

Drehzahlregelung II

Die durch den Regler 1 bewirkte Drehzahlregelung kann eine übliche Standardregelung und so ausgelegt sein, dass unabhängig zur Belastung bestimmte vorgegebene Drehzahlwerte beim Arbeiten eingehalten werden. Hierzu kann, obwohl dies für die Realisierung vorliegender Erfindung nicht ausschlaggebend ist und daher auch diese nicht einschränken kann, ein Istdrehzahlgeber in Form eines vom Motor M angetriebenen Tachogenerators G vorgegeben sein, dessen Ausgangssignal über einen Widerstand R5 auf den Drehzahl-Istwerteinang E1 des Reglers 1 gelangt. Die Standardregelung erfolgt dann in der Weise, dass ein vorgegebener Solldrehzahlwert, der durch Einstellung von Hand vom Benutzer erzeugt werden kann und/oder bei Einsatz vorliegender Erfindung auf weiter unten noch zu beschreibende Weise zum Regler 1 gelangt, mit der Istdrehzahl vom Eingang E1 verglichen und in entsprechender Weise und bevorzugt nach Art einer Phasenanschnittschaltung der Triac 30 über eine Diode D5 angesteuert wird.

Stromsensor II

Der Stromsensor 2 ist realisiert durch einen mit dem Motor M und dem ihn ansteuernden Triac 30 in Reihe liegenden, verständlicherweise sehr niederohmigen Widerstand R6, dessen vom Laststrom durch den Motor M verursachter Spannungsabfall über einen Widerstand R4 zum IC des Regelbausteins 1 gelangt (Eingang E2 für den Istwert des Laststromes). Das sich so ergebende Spannungssignal wird im Regelbaustein 1 selbst in geeigneter Weise verstärkt, gegebenenfalls gleichgerichtet und gelangt zu einem Ausgang A1, an welchem das dem Laststrom proportionale Spannungssignal über das RC-Glied aus dem Kondensator C9', mit parallelgeschalteten Widerständen R15' und R15" integriert wird.

In diesem Zusammenhang ist auf folgendes hinzuweisen. In Fig. 5 sind die einzelnen Schaltungskomponenten, soweit möglich, gestrichelt umrandet und insoweit auf die Schaltungsblöcke der Fig. 4 bezogen; ferner ist bei der praktischen Realisierung der erfindungsgemässen Schaltung so vorgegangen worden, dass gegen Nullpotential oder Masse die Spannungsversorgung mit negativer Spannung (−U) − hier hauptsächlich im Bereich der im folgenden noch zu erläuternden Schaltungskomponenten erfolgt. Eine Einschränkung der Erfindung ergibt sich hierdurch nicht, die Versorgungsspannungen sind aus Zweckmässigkeitsgründen in dieser Weise gewählt. Der Motor M ist üblicherweise wechselspannungsgespeist.

Überschreitet das am Stromsensor-Kondensator C9' sich ergebende, am Ausgang A1 des Regelbausteins anliegende Integral einen bestimmten Wert, dann kann eine Strombegrenzung des Regelbausteins 1 aktiv werden.

Stromerkennung II

Zur Stromerkennung ist der Stromsensor-Kondensator C9' mit dem einen Eingang (invertierenden Eingang) eines Komparators K1 verbunden, der, wie auch die nachfolgend noch zu erwähnenden Komparatoren, als integrierter Baustein ausgeführt sein kann. Dem anderen Eingang des Komparators ist über die zwischen −U und Masse geschaltete Spannungsteilerschaltung aus den Widerständen R30, R31 und R32 sowie eines als NTC-Widerstandes ausgebildeten Widerstandes R33 ein − wenn man den Einfluss des NTC-Widerstandes zunächst nicht berücksichtigt − konstantes Vergleichspotential zugeführt, so dass der Komparator K1 einen über einen vorgegebenen Schwellenwert liegenden Spannungsanstieg an C9 entsprechend einer unter Umständen auch nur geringen Belastung der Maschine erfassen kann. Bei dem dargestellten praktischen Ausführungsbeispiel ergibt sich durch die Integrierung am Kondensator C9' ein Spannungsanstieg in positiver Richtung am invertierenden Eingang von K1 dann, wenn die Belastung des Elektromotors M ansteigt. Der Komparator K1 schaltet dann um und lädt über den Widerstand R19 einen ihm nachgeschalteten Kondensator C15, und zwar, wieder angewendet auf das praktische Ausführungsbeispiel, mit in negativer Richtung anwachsender Spannung.

Temperaturkompensation II

Die Temperaturkompensation gehört schaltungsmässig in den Bereich der Stromerkennung und ist realisiert durch den Widerstand R33, der als NTC-Widerstand ausgebildet und so untergebracht ist, dass er in enger Beziehung mit einem geeigneten Teil der Maschine, des Elektromotors oder der Wicklung stehenden den Temperaturgang der Maschine erfasst und entsprechend die Empfindlichkeit der Stromerkennung erhöht. Der Grund hierfür liegt darin, dass bei gleicher Änderung der Belastung die Stromänderung bei warmer Maschine geringer als bei kalter Maschine ist, so dass die Aufheizung des NTC-Widerstandes R33 dazu dient, die Vergleichsschwelle am Komparator K1 in Richtung auf eine höhere Empfindlichkeit bei warmer Maschine zu verlagern. Bevorzugt ist der NTC-Widerstand R33 so untergebracht, dass er vom Stromversorgungswiderstand R1 nach dem Einschalten der Maschine langsam aufgeheizt wird.

Retriggerbare Zeitstufe II

Wie erwähnt wird mit jeder Belastung und entsprechender Umschaltung des Komparators K1 der Kondensator C15 aufgeladen, und da der Kondensator C15 zusammen mit einem parallelen Entladewiderstand R34 im invertierenden Eingang eines nachgeschalteten Komparators K2 liegt, schaltet dieser seinen Ausgang jeweils so lange in Richtung auf positive Spannung (gegen Masse mit Bezug auf die hier wirksame Versorgungsspannung –U), bis sich der Kondensator C15 über den parallelen Widerstand R34 wieder unter die am anderen Eingang des Komparators K2 anliegende konstante Spannung entladen hat. Hierzu ist ein Spannungsteiler aus den Widerständen R30, R35 noch vorgesehen. Dabei ist das Zeitglied aus C15 und R34 so ausgebildet, dass das Rückschalten des Komparators K2 nach erfolgtem Umschalten des Komparators K1 bei Beendigung oder Rückgang der Maschinenbelastung verzögert erfolgt, d.h. es ergibt sich der gewünschte Nachlauf für eine vorgegebene Zeitspanne und das Verharren des Elektromotors auch auf Arbeitsdrehzahl dann, wenn kurzfristig abgesetzt wird. Ein solches, kurzfristig unterbrochenes Arbeiten mit von Elektromotoren angetriebenen Arbeitswerkzeugen ergibt sich ja häufig, beispielsweise wenn beim Bohren der Bohrer jeweils zurückgezogen wird, um Schmiermittel zuzuführen, oder wenn beim Betrieb mit einer Kreissäge neues Holz zugeführt wird. Es versteht sich, dass dann bei jeder erneuten Belastung, auch während des Zeitablaufs beim Verbleiben in der Arbeitsdrehzahl der Kondensator C15 erneut aufgeladen wird, so dass bei nur kurzfristig unterbrochenem Arbeiten durch die Retriggerung die Arbeitsdrehzahl ständig zur Verfügung steht und nicht eine ungewollte Störung auftritt, weil der antreibende Elektromotor bei jedem Absetzen sofort auf Leerlaufdrehzahl zurückfällt.

Das Ausgangssignal des Komparators K2 der retriggerbaren Zeitstufe 4 erfährt dann eine dreifache Verwertung, die im folgenden erläutert wird.

Drehzahlumschaltung II

Einem Eingang E3 des IC-Regelbausteins 1 wird über einen Spannungsteiler aus R36, R37 mit einem Kondensator C5 parallel zu R36 ein Drehzahl-Sollwert zugeführt. Während der Bereitstellungsdrehzahl – ohne Last und Ausgang von K2 im wesentlichen auf negativer Versorgungsspannung (–U) – liegt daher der Widerstand R24 über die Diode D5 parallel zu R36 und es ergibt sich ein Spannungsteilerverhältnis mit einer Steuerspannung am Eingang E3, die dem Sollwert der Bereitstellungsdrehzahl (Leerlaufdrehzahl) entspricht. Der Drehzahl-Regelbaustein 1 stellt diese dann auch ein.

Geht, wie soeben erwähnt, durch eine Belastung der Maschine der Ausgang des Komparators K2 gegen Masse, dann sperrt die Diode D5 und der Widerstand R24 wird aus dem Spannungsteilerverhältnis aus R36, R37 weggeschaltet; hierdurch geht dann der Drehzahl-Sollwert an E3 in Richtung auf positivere Spannungen und der Elektromotor M wird auf Arbeitsdrehzahl beschleunigt.

Hochlaufbeschleunigung II

Gleichzeitig mit der Umschaltung von K2 an seinem Ausgang fliesst über die Widerstände R23 in Reihe mit R38 und der Diode D6 ein zusätzlicher Ladestrom in einen Kondensator C8, der an einem weiteren Eingang E4 des IC-Regelbausteins 1 angeschlossen ist. Dieser Kondensator ist Teil einer Sanftanlaufschaltung innerhalb des Regelbausteins 1 – durch die äussere Beschaltung mit dem Kondensator C8 lässt sich das Ausmass des Sanftanlaufs entsprechend variieren – und man erzielt hierdurch eine erhebliche Versteilerung der Drehzahlzunahme bei Übergang auf die Arbeitsdrehzahl. Auch dies ist besonders vorteilhaft, da hierdurch selbst kürzeste Anlauf- oder Wartezeiten praktisch vermeidbar sind, so dass der Benutzer das Gefühl hat, dass die Maschine auf die Leistunganforderung auch sofort effektiv anspricht. Die Funktion des Regelbausteins 1 ist im übrigen so ausgelegt, dass bei jedem Abschalten durch ein internes Reset dieser Kondensator C8 entladen wird, so dass der Sanftanlauf (Vermeidung hoher Einschaltströme) immer wieder neu einsetzt. Diese Entladung des Kondensators C8 ist weiter unten noch für die Ausblendung des Anlaufstromes in seiner Wirkung auf die Drehzahlumschaltung Leerlauf – Arbeitsdrehzahl von Bedeutung.

Umschaltung der Ansprechempfindlichkeit II

Auch ohne Belastung ist die Stromaufnahme des Elektromotors bei Arbeitsdrehzahl höher als bei Bereitstellungs- oder Leerlaufdrehzahl, so dass es notwendig ist, nach dem Hochschalten die Empfindlichkeit der Stromerkennung zurückzunehmen, damit aus der Arbeitsdrehzahl, wenn die Belastung aufgehört hat, überhaupt in die Bereitstellungsdrehzahl rückgeschaltet werden kann. Ist daher durch Umschaltung von K2 die Maschine auf Arbeitsdrehzahl hochgesteuert worden, dann steuert der Ausgang von K2 gleichzeitig durch Anschluss an den invertierenden Eingang eines weiteren Komparators K3 – der andere Eingang dieses Komparators liegt am gleichen Spannungsteileranschaltpunkt aus den Widerständen R30, R35 wie der Komparator K2 – den Ausgang von K3 auf im wesentlichen negative Versorgungsspannung (wie es sich versteht, nur in diesem praktischen Anwendungsbeispiel), so dass der Widerstand R25 parallel zu dem Stromsensor-Kondensator C9′ und dessen Parallelwiderstände R15′, R15″ geschaltet wird. Hierdurch ergibt sich eine zusätzliche Belastung der aus dem Laststrom am Kondensator C9′ integrierten Spannung und um nun – bei Arbeitsdrehzahl – die gleiche Spannung am Kondensator C9′ zu erreichen, die ein Verbleiben in der Arbeitsdrehzahl rechtfertigen würde, muss ein grösserer Strom fliessen, und dies kann dann nur bei Belastung bei Arbeitsdrehzahl erfolgen. Mit anderen Worten, die lediglich Arbeitsdrehzahl der Maschine kann das Potential am Kondensator C9′ nicht halten, so dass der Komparator K1 rückschaltet und, unter Beachtung der Zeitkonstanten aus C15 parallel zu R34, dann auch die Rücknahme der Drehzahl auf die Bereitstellungsdrehzahl erfolgt.

Ausblendung des Anlaufstromes II

Der beim Einschalten eines Elektromotors immer auftretende, hohe Einschaltstrom – auch wenn Sanftanlaufautomatik vorhanden ist –, würde ein sofortiges Hochbeschleunigen auf Arbeitsdrehzahl verursachen, wobei sogar, zum Teil jedenfalls, die Sanftanlaufautomatik durch den starken, in den Kondensator C8 fliessenden Ladestrom ausser Kraft gesetzt werden würde.

Daher ist eine die Wirkungen des Anlaufstromes ausblendende Schaltung 8 vorgesehen, die bei dem dargestellten Ausführungsbeispiel gebildet ist von einem weiteren Komparator K4, dessen einem Eingang über die Reihenschaltung der Widerstände R26 und R27 ein konstantes Vergleichspotential zugeführt ist und in dessen anderem Eingang (nichtinvertierender oder +Eingang) eine Zeitschaltung aus einem Kondensator C16 und einem Widerstand R39 liegt. Es ist von wesentlicher Bedeutung, dass der Widerstand R39 hierbei an den Fusspunkt des Sanftanlaufkondensators C8 (entsprechend Eingang E4) angeschlossen ist, da sich hierdurch die folgende Funktion ergibt. Zunächst ist beim Einschalten des Gesamtsystems der Komparator K4 durch die Potentialverteilung an seinen Eingängen so beaufschlagt, dass er den Kondensator C9' überbrückt, also kurzschliesst und den Aufbau einer entsprechenden Spannung, auf die die Stromerkennungsschaltung 3 ansprechen könnte, verhindert. Erst wenn nach Überwindung des Sanftanlauf-Zeitraums der Kondensator C8 entsprechend geladen ist, wird die Spannung, die über R39 zum nichtinvertierenden Eingang von K4 gelangt, positiver als die aus der Spannungsteilerschaltung aus R26, R27 abgeleitete Spannung, so dass der Komparator K4 abhängt bzw. sperrt und die Ladung des Kondensators C9' freigibt. Das von R39 /C16 gebildete Zeitglied ist dabei so eingestellt, dass verhindert wird, dass ein kurzes Einschwingen der Drehzahl den Kondensator C9' noch laden kann.

Da, wie schon erwähnt, aufgrund des internen Resets durch den Regelbaustein 1 der Kondensator C8 bei jedem Abschalten entladen wird, ergibt sich auch bei jedem erneuten Einschalten die Überbrückung des Kondensators C9' durch den Komparator K4, was erhebliche Vorteile bietet, wenn beispielsweise schnell hin- und hergeschaltet wird mit willkürlichen Pausen. In diesem Fall könnte der Kondensator C16 gegebenenfalls nicht mehr schnell genug entladen werden und je nach Art des wiederholten Ein- und Ausschaltens gelänge eine Ausblendung des Anlaufstromes nicht immer.

Alle in der Detailschaltung der Fig. 5 nicht mit Bezugszeichen versehenen Schaltungskomponenten sind für die Funktion vorliegender Erfindung von geringerer oder ohne Bedeutung und lediglich aus Gründen einer umfassenden Darstellung angegeben.

## Patentansprüche

1. Verfahren zur Regelung eines Elektromotors, insbesondere zum Antrieb von Handwerkzeugen, Sägen u.dgl., bei welchem die Drehzahl im lastfreien Leerlaufbetrieb automatisch abgesenkt und im Arbeitsbetrieb unter Last auf vorgegebene Drehzahlwerte (Nenndrehzahl) dadurch angehoben wird, dass der vom Elektromotor jeweils gezogene Strom erfasst und zur sprunghaften Umschaltung der dem Elektromotor zugeführten Effektivspannung ausgewertet wird, dadurch gekennzeichnet, dass beim Übergang auf den Lastbetrieb mit erhöhter Drehzahl gleichzeitig der Stromsensorbereich durch Umschalten auf einen höheren Schwellwert in seiner Empfindlichkeit nachgeführt wird und die Rückschaltung auf Leerlaufdrehzahl beim Übergang zum lastfreien Zustand für eine vorgegebene Dauer verzögert wird.

2. Verfahren nach Anspruch 1, dadurch gekennzeichnet, dass eine beim Einschalten einen sofortigen Übergang auf Arbeitsdrehzahl verhindernde Einschaltverzögerung bei jedem Ein- bzw. Ausschaltvorgang erneut auf ursprüngliche Anfangsbedingungen rückgesetzt wird.

3. Verfahren nach Anspruch 1 oder 2, dadurch gekennzeichnet, dass bei aus einer Laststromänderung abgeleiteter Arbeitsdrehzahlanforderung eine zusätzliche Hochbeschleunigung durch Unterdrückung eines üblichen Sanftanlaufbetriebes vorgenommen wird.

4. Verfahren nach einem der Ansprüche 1 bis 3, dadurch gekennzeichnet, dass die Empfindlichkeit der eine Änderung der Belastung vermittelnden Stromerkennung auf die Temperatur des Elektromotors und/oder sonstiger Schaltungskomponenten abgestellt wird.

5. Verfahren nach einem der Ansprüche 1 bis 4, dadurch gekennzeichnet, dass die Empfindlichkeitsnachführung des Stromsensors bei Umschalten auf einen höheren Schwellenwert verzögert erfolgt.

6. Vorrichtung zur Regelung eines Elektromotors (M), insbesondere zum Antrieb von Handwerkzeugen, Sägen u.dgl., wobei die Drehzahl im lastfreien Leerlaufbetrieb automatisch abgesenkt und im Arbeitsbetrieb unter Last auf vorgegebene Drehzahlwerte (Arbeitsdrehzahl) dadurch angehoben wird, dass der vom Elektromotor jeweils gezogene Strom von einem Stromsensor (2, 12) erfasst und zur Drehzahlumschaltung durch Änderung der dem Elektromotor zugeführten Effektivspannung über eine Drehzahlregelschaltung ausgewertet ist, dadurch gekennzeichnet, dass eine retriggerbare Zeitstufe (4, 14) vorgesehen und so geschaltet ist, dass bei Überschreiten eines vorgegebenen Stromschwellenwertes eine Triggerung vom Stromsensor (2, 12) erfolgt, dass die Zeitstufe (4, 14) bei aufrechterhaltenen Lastbedingungen die Drehzahlregelschaltung (1, 10) so ansteuert, dass die Drehzahl des Elektromotors auf Arbeitsdrehzahl verbleibt, dass nach Unterschreiten des Stromsensor-Schwellenwerts durch den effektiv vom Elektromotor gezogenen Strom die Zeitstufe (14) die Drehzahlregelschaltung (1, 10) für eine vorgegebene Nachlaufzeit auf Arbeitsdrehzahl hält und dass der Stromsensor (2, 12) zwischen zwei vorgegebenen Stromschwellenwerten umschaltbar ist und durch die Zeitstufe (14) bei getriggertem Zustand auf dem höheren dieser Stromschwellenwerte umgeschaltet gehalten ist.

7. Schaltungsanordnung nach Anspruch 6, dadurch gekennzeichnet, dass der Stromsensor (12) durch die Zeitstufe (14) über ein Verzögerungsglied (R13, C13) auf den höheren Stromschwellenwert umschaltbar ist.

8. Schaltungsanordnung nach Anspruch 6 oder 7, dadurch gekennzeichnet, dass eine Einschaltverzögerung (20) vorgesehen ist, die für eine vorgegebene Zeitspanne nach dem Einschalten der Versorgungsspannung ein Umschalten der Drehzahlregelungsschaltung (10) auf die Arbeitsdrehzahl verhindert.

9. Schaltungsanordnung nach Anspruch 8, dadurch gekennzeichnet, dass die Einschaltverzögerung (20) das Triggern der Zeitstufe (14) verhindert.

10. Schaltungsanordnung nach einem der Ansprüche 6 bis 9, dadurch gekennzeichnet, dass der Stromsensor (12) einen mit dem Elektromotor (M) in Serie geschalteten ohmschen Widerstand (R6) aufweist, und dass die über diesen Widerstand (R6) abfallende Spannung ein elektronisches Schaltelement (T1) steuert, über welches die Zeitstufe (4, 14) getriggert wird.

11. Schaltungsanordnung nach Anspruch 10, dadurch gekennzeichnet, dass das Schaltelement ein Schalttransistor (T1) ist.

12. Schaltungsanordnung nach Anspruch 10 oder 11, dadurch gekennzeichnet, dass die Zeitstufe (14) einen über das Schaltelement aufladbaren Kondensator (C9) aufweist, dessen Ladespannung die Drehzahlregelungsschaltung (10) steuert.

13. Schaltungsanordnung nach Anspruch 12, dadurch gekennzeichnet, dass ein den Kondensator (C9) entladender Widerstand (R15) vorgesehen ist, wobei die Zeitkonstante des Kondensators (C9) und des Widerstandes (R15) die Nachlaufzeit festgelegt.

14. Schaltungsanordnung nach einem der Ansprüche 10 bis 13, dadurch gekennzeichnet, dass die an dem Widerstand (R6) des Stromsensors (12) abfallende Spannung über einen durch die Zeitstufe (14) umschaltbaren Spannungsteiler (R20, R21) an dem Schaltelement anliegt.

15. Schaltungsanordnung nach Anspruch 12, dadurch gekennzeichnet, dass der Kondensator (C9) der Zeitstufe (14) durch eine Diode (D3) und ein Integrationsglied (R16, C10) überbrückt ist, wobei die Diode (D3) nach der durch das Integrationsglied bestimmten Zeitkonstante nach dem Einschalten der Versorgungsspannung sperrt.

16. Vorrichtung nach einem der Ansprüche 6 bis 15, dadurch gekennzeichnet, dass die, nach Verstärkung vorzugsweise durch einen IC-Regelbaustein (1) selbst, am Integrierkondensator (C9') abfallende lastproportionale Spannung an einem ersten Komparator (K1) mit einer von der Temperatur des Systems abhängigen Referenzspannung verglichen und am Ausgang des Komparators einem den Nachlauf des Elektromotors bei Arbeitsdrehzahl sicherstellenden Zeitglied (C15, R34) zugeführt ist.

17. Vorrichtung nach Anspruch 16, dadurch gekennzeichnet, dass das lastproportionale Spannungssignal nach Integration am Zeitglied (C15, R34) einem nachgeschalteten zweiten Komparator (K2) zugeführt ist, dessen Ausgang verbunden ist mit einer Sanftanlaufschaltung zur Unterdrückung des Sanftanlaufverhaltens bei Anforderung der Arbeitsdrehzahl, mit einer Solldrehzahl-Umschalt-Schaltung (Spannungsteiler R36, R37) sowie rückwirkend mit dem Integrierkondensator (C9') für das lastproportionale Spannungssignal zur Reduzierung der Stromerkennungs-Empfindlichkeit.

18. Vorrichtung nach Anspruch 16 oder 17, dadurch gekennzeichnet, dass eine zum Integrierkondensator (C9') parallele Unterdrückungsschaltung (Komparator K4) angeordnet ist, die jeweils beim Einschalten des Systems den hohen Anlaufstrom ausblendet, derart, dass ein sofortiger Übergang auf Arbeitsdrehzahl vermieden ist.

19. Vorrichtung nach Anspruch 18, dadurch gekennzeichnet, dass die Unterdrückungsschaltung als Komparator (K4) ausgebildet ist, dessen einem Eingang eine konstante Referenzspannung und dessen anderem Eingang, vorzugsweise über ein Zeitglied (C16, R39) eine Bezugsspannung zugeführt ist, die sich bei Erreichen vorgegebener Drehzahlwerte so ändert, dass der Komparator (K4) abhängt.

20. Vorrichtung nach Anspruch 18 oder 19, dadurch gekennzeichnet, dass die Bezugsspannung vom Zeitkondensator (C8) einer Sanftanlaufschaltung gebildet ist und dass der durch sein Ladeverhalten bei jedem neuen Einschalten den Sanftanlauf des Gerätes sicherstellende Zeitkondensator durch internes Reset, vorzugsweise durch den IC-Regelbaustein (1), bei jedem Ausschalten rückgesetzt wird.

21. Vorrichtung nach einem der Ansprüche 16 bis 20, dadurch gekennzeichnet, dass vom Ausgang des zweiten Komparators (K2) zur Hochlaufbeschleunigung bei Anforderungen der Arbeitsdrehzahl eine Ladeleitung zum Zeitkondensator (C8) der Sanftanlaufschaltung gebildet ist.

**Revendications**

1. Procédé pour régler un moteur électrique, prévu notamment pour entraîner des outils portatifs, des scies, etc, moteur dont la vitesse de rotation se réduit automatiquement pendant le fonctionnement à vide, et est augmentée à des valeurs prédéfinies (vitesse de rotation nominale) lors du fonctionnement en charge, du fait que le courant prélevé dans chaque cas par le moteur électrique est détecté et exploité pour commuter rapidement la tension utile appliquée au moteur électrique, procédé caractérisé en ce que, lors du passage au fonctionnement en charge avec une vitesse de rotation augmentée, la zone d'action du détecteur de courant est simultanément réajustée en sensibilité par commutation sur une valeur de seuil plus élevée, tandis que la commutation en retour sur la vitesse de rotation en marche à vide, lors du passage au fonctionnement sans charge, est retardée pour une durée prédéfinie.

2. Procédé selon la revendication 1, caractérisé en ce qu'une temporisation de mise en circuit, empêchant lors de la mise en circuit un passage immédiat à la vitesse de rotation en charge, est remise dans les conditions initiales de départ lors de chaque processus de mise en circuit ou hors circuit.

3. Procédé selon la revendication 1 ou 2, caractérisé en ce que, dans le cas d'une demande, dérivée d'une modification du courant de charge, de la vitesse de rotation de fonctionnement en charge, il est prévu une accélération supplémentaire de l'augmentation par suppression d'un démarrage doux classique.

4. Procédé selon une des revendications 1 à 3, caractérisé en ce que la sensibilité de la détection du courant intervenant pour une modification de la charge, est ajustée à la température du moteur électrique et/ou d'autres composants du circuit.

5. Procédé selon une des revendications 1 à 4, caractérisé en ce que le réajustement de la sensibilité du détecteur de courant, lors de la commutation sur une valeur de seuil plus élevée, s'effectue avec retard.

6. Dispositif pour le réglage d'un moteur électrique (M), prévu notamment pour entraîner des outils portatifs, des scies, etc., moteur dont la vitesse de rotation se réduit automatiquement pendant le fonctionnement à vide, et est augmentée à des valeurs prédéfinies (vitesse de rotation en charge) lors du fonctionnement en charge, du fait que le courant prélevé dans chaque cas par le moteur électrique est détecté par un détecteur de courant (2, 12), et est exploité par l'intermédiaire d'un circuit de réglage de la vitesse de rotation, pour commuter la vitesse de rotation en modifiant la tension utile appliquée au moteur électrique, dispositif caractérisé en ce qu'il est prévu un étage de temporisation réactivable (4, 14) et branché de telle façon que, lors du dépassement d'une valeur de seuil prédéfinie du courant, il se produise un déclenchement par le détecteur de courant (2, 12), que l'étage de temporisation (4, 14), dans le cas où les conditions de charge sont maintenues, commande le circuit de réglage (1, 10) de la vitesse de rotation de façon que la vitesse de rotation du moteur électrique se maintienne à la vitesse de rotation en charge, qu'après le franchissement vers le bas de la valeur de seuil du détecteur de courant par le courant effectivement prélevé par le moteur électrique, l'étage de temporisation (14) maintient, pour un laps de temps supplémentaire prédéfinie, le circuit de réglage (1, 10) de la vitesse de rotation à la vitesse de rotation en charge, le détecteur de courant (2, 12) étant susceptible d'être commuté entre deux valeurs de seuil prédéfinies du courant, et étant maintenu commuté sur la plus élevée de ces valeurs de seuil du courant par l'étage de temporisation (14) lorsque celui-ci est déclenché.

7. Dispositif selon la revendication 6, caractérisé en ce que le détecteur de courant (12) est susceptible d'être commuté par l'étage de temporisation (14), sur la valeur la plus élevée du courant, par l'intermédiaire d'un organe de temporisation (R13, C13).

8. Dispositif selon la revendication 6 ou 7, caractérisé en ce qu'il est prévu une temporisation de mise en circuit (20) qui, pour un laps de temps prédéfini après l'application de la tension d'alimentation, empêche une commutation du circuit de réglage (10) de la vitesse de rotation sur la vitesse de rotation en charge.

9. Dispositif selon la revendication 8, caractérisé en ce que la temporisation (20) de mise en circuit empêche le déclenchement de l'étage de temporisation (14).

10. Dispositif selon une des revendications 6 à 9, caractérisé en ce que le détecteur de courant (12) comporte une résistance ohmique (R6), branchée en série avec le moteur électrique (M), et que la tension chutant sur cette résistance (R6) commande un élément électronique de commutation (T1), par l'intermédiaire duquel l'étage de temporisation (4, 14) est déclenché.

11. Dispositif selon la revendication 10, caractérisé en ce que l'élément de commutation est un transistor de commutation (T1).

12. Dispositif selon la revendication 10 ou 11, caractérisé en ce que l'étage de temporisation (14) comporte un condensateur (C9) susceptible d'être chargé par l'intermédiaire de l'élément de commutation, et dont la tension de charge commande le circuit de réglage (10) de la vitesse de rotation.

13. Dispositif selon la revendication 12, caractérisé en ce qu'il est prévu une résistance (R15) déchargeant le condensateur (C9), la constante de temps du condensateur (C9) et de la résistance (R15) déterminant le laps de temps supplémentaire.

14. Dispositif selon une des revendications 10 à 13, caractérisé en ce que la tension chutant sur la résistance (R6) du détecteur de courant (12) est appliquée à l'élément de commutation par l'intermédiaire d'un diviseur de tension (R20, R21) susceptible d'être commuté par l'étage de temporisation (14).

15. Dispositif selon la revendication 12, caractérisé en ce que le condensateur (C9) de l'étage de temporisation (14) est shunté par une diode (D3) et un organe d'intégration (R16, C10), la diode (D3) se bloquant, après l'application de la tension d'alimentation, selon les constances de temps déterminées par l'organe d'intégration.

16. Dispositif selon une des revendications 6 à 15, caractérisé en ce que la tension proportionnelle à la charge, chutant sur le condensateur d'intégration (C9'), est, après amplification automatique, de préférence par un bloc de réglage IC (1), comparée sur un premier comparateur (K1) avec une tension de référence dépendant de la température du système, et est appliquée à la sortie de ce comparateur à un organe de temporisation (C15, R34) assurant la poursuite du fonctionnement du moteur électrique à la vitesse de rotation en charge.

17. Dispositif selon la revendication 16, caractérisé en ce que le signal de tension proportionnel à la charge, après intégration sur l'organe de temporisation (CL5, R34) est appliqué à un deuxième comparateur (K2) branché à la suite, dont la sortie est reliée à un circuit de démarrage progressif pour supprimer ce démarrage progressif lors de la demande de la vitesse de rotation en charge, à un circuit de commutation de la vitesse de rotation de consigne (diviseur de tension R36, R37), ainsi que de façon rétroactive au condensateur d'intégration (C9') pour le signal de tension proportionnel à la charge, afin de réduire la sensibilité de la détection du courant.

18. Dispositif selon la revendication 16 ou 17, caractérisé en ce qu'il est prévu un circuit de suppression (comparateur K4) en parallèle sur le condensateur d'intégration (C9'), ce circuit supprimant à chaque mise en circuit du système le courant élevé de démarrage, de façon à éviter un passage immédait à la vitesse de rotation en charge.

19. Dispositif selon la revendication 18, caractérisé en ce que le circuit de suppression revêt la forme d'un comparateur (K4), à l'une des entrées duquel est appliquée une tension de référence constante, tandis qu'à l'autre l'entrée est appliquée, de préférence par l'intermédiaire d'un organe de temporisation (C16, R39), une tension de comparaison qui se modifie de façon telle, lorsque sont atteintes des valeurs prédéfinies de la vitesse de rotation, que le comparateur (K4) décroche.

20. Dispositif selon la revendication 18 ou 19, caractérisé en ce que la tension de comparaison est établie par le condensateur de temporisation (C8) d'un circuit de démarrage progressif, et que ce condensateur de temporisation, dont l'état de charge assure, lors de chaque nouvelle mise en circuit, le démarrage progressif de l'appareil, est remis à l'état initial lors de chaque mise hors circuit, par un moyen interne de remise à zéro, de préférence par le bloc de réglage IC (1).

21. Dispositif selon une des revendications 16 à 20, caractérisé en ce qu'il est prévu, pour accélérer l'augmentation de vitesse lors des demandes de vitesse de rotation en charge, une liaison de charge entre la sortie du deuxième comparateur (K2) et le condensateur de temporisation (C8) du circuit de démarrage progressif.

**Claims**

1. A method of regulating an electric motor, in particular for driving hand tools, saws and the like, in which the rotational speed under no-load running operation is automatically reduced and in working operation under load is increased to predetermined rotational speed values (nominal speed) on account of the fact that the current drawn in each case from the electric motor is detected and is evaluated for the sudden change of the effective voltage supplied to the electric motor, characterized in that, in the change-over to on-load operation with increased rotational speed, the current sensor range is simultaneously followed up by change to a higher threshold value in its sensitivity and the switching back to the no-load running operation is delayed for a predetermined duration.

2. A method according to Claim 1, characterized in that a switch-on time lag which prevents an immediate change-over to operating speed when switching on is set back once again to original starting conditions at each switching on or off procedure.

3. A method according to Claim 1 or 2, characterized in that when an operating speed requirement derived from a load current change is made, an additional high acceleration takes place by suppressing a customary smooth starting operation.

4. A method according to any one of Claims 1 to 3, characterized in that the sensitivity of the current detection determining a change in the load is set to the temperature of the electric motor and/or other switching components.

5. A method according to any one of Claims 1 to 4, characterized in that the sensitivity follow-up of the current sensor is delayed during change to a higher threshold value.

6. An apparatus for regulating an electric motor (M), in particular for driving hand tools, saws and the like, the rotational speed under no-load running operation being automatically reduced and in working operation under load being increased to predetermined rotational speed values (operating speed) on account of the fact that the current drawn in each case from the electric motor is detected by a current sensor (2, 12) and is evaluated by way of a rotational speed regulating circuit for the rotational speed change by changing the effective voltage supplied to the electric motor, characterized in that a retriggerable delay stage (4, 14) is provided and is arranged in such a way that when a predetermined current threshold value is exceeded the current sensor (2, 12) is triggered, the delay stage (4, 14) controls the rotational speed regulating circuit (1, 10) in such a way, while the load conditions are maintained, that the rotational speed of the electric motor remains at operating speed, the delay stage (14) holds the rotational speed regulating circuit (1, 10) at operating speed for a predetermined follow-up time after the current effectively drawn from the electric motor falls below the current sensor threshold value, and the current sensor (2, 12) is changeable between two predetermined current threshold values and in the triggered state is held changed at the higher of these current threshold values by the time stage (14).

7. A circuit arrangement according to Claim 6, characterized in that the current sensor (12) is changeable by the delay stage (14), by way of a time-lag means (R13, C13), to the higher current threshold value.

8. A circuit arrangement according to Claim 6 or 7, characterized in that a switch-on time lag (20) is provided which prevents a change of the rotational speed regulating circuit (10) to the operating speed for a predetermined period of time after switching on the supply voltage.

9. A circuit arrangement according to Claim 8, characterized in that the switch-on time lag (20) prevents the triggering of the delay stage (14).

10. A circuit arrangement according to any one of Claims 6 to 9, characterized in that the current sensor (12) comprises an ohmic resistor (R6) connected in series with the electric motor (M), and the voltage drop above this resistor (R6) controls an electronic switching element (T1) by way of which the delay stage (4, 14) is triggered.

11. A circuit arrangement according to Claim 10, characterized in that the switching elements is a switching transistor (T1).

12. A circuit arrangement according to Claim 10 or 11, characterized in that the delay stage (14) comprises a capacitor (C9) which is chargeable by way of the switching element and the charging voltage of which controls the rotational speed regulating circuit (10).

13. A circuit arrangement according to Claim 12, characterized in that a resistor (R15) discharging the capacitor (C9) is provided, the time constant of the capacitor (C9) and of the resistor (R15) determining the follow-up time.

14. A circuit arrangement according to any one of Claims 10 to 13, characterized in that the voltage drop at the resistor (R15) of the current sensor (12) bears on the switching element by way of a voltage divider (R20, R21) changeable by the delay stage (14).

15. A circuit arrangement according to Claim 12, characterized in that the capacitor (C9) of the time stage (14) is bridged by a diode (D3) and an integrating circuit (R16, C10) the diode (D3) locking according to the time constants determined by the integrating circuit after the supply voltage has been switched on.

16. A circuit arrangement according to any one of Claims 6 to 15, characterized in that the load-proportional voltage, which drops down at the integrating capacitor (C9') after amplification preferably by an IC control module (1) itself, is compared at a first comparator (K1) with a reference voltage dependent upon the temperature of the system and is supplied at the output of the comparator to a delay circuit (C15, R34) ensuring the follow-up of the electric motor at operating speed.

17. A circuit arrangement according to Claim 16, characterized in that the load-proportional voltage signal is supplied after integration at the delay circuit (C15, R34) to a second comparator (K2) which is arranged downstream and the output of which is connected to a smooth starting circuit for suppressing the smooth starting action when the operating speed is required, with a nominal speed change circuit (voltage dividers R36, R37) and retroactively with the integrating capacitor (C9') for the load-proportional voltage signal for reducing the current determination sensitivity.

18. A circuit arrangement according to Claim 16 or 17, characterized in that a suppression circuit (comparator K4) parallel to the integrating capacitor (C9') is provided, which each time the system is switched on cuts out the high starting current in such a way that an immediate changeover to the operating speed is prevented.

19. A circuit arrangement according to Claim 18, characterized in that the suppression circuit is formed as a comparator (K4), to one input of which is supplied a constant reference voltage and to the other input of which is supplied, preferably by way of a delay means (C16, R39), a reference voltage which when predetermined rotational speed values are reached is changed in such a way that the comparator (K4) follows.

20. A circuit arrangement according to Claim 18 or 19, characterized in that the reference voltage is formed by the delay capacitor (C8) of a smooth starting circuit, and the delay capacitor, which ensures the smooth starting of the appliance by its loading action each time switching on takes place again, is reset by internal resetting, preferably by the IC control module (1).

21. A circuit arrangement according to any one of Claims 16 to 20, characterized in that a loading line to the delay capacitor (C8) of the smooth starting circuit is formed from the output of the second comparator (K2) to the run-up acceleration when the operating speed is required.

# Fig. 1

Fig. 2

2/5

Fig. 3

Drehzahl
n
$[\min^{-1}]$

Arbeitsdrehzahl
3000-4000

Bereitstell
lungsdrehzahl
2200-2300

$t_0$ $t_1$        $t_2$ $t_3$                    $t_4$    $t_5$ $t_6$   $t_7$

Fig. 4

0 135 613

Fig.5

0 135 613

23